# NEUE EUROPÄISCHE PATENTSCHRIFT

(11) **EP 2 866 206 B2**
(45) Veröffentlichungstag und Bekanntmachung des Hinweises auf die Entscheidung über den Einspruch: **27.10.2021**
(45) Hinweis auf die Patenterteilung: 30.12.2015
(21) Anmeldenummer: 13189863.7
(22) Anmeldetag: 23.10.2013
(51) Int. Cl.: G07B 15/06, G01C 21/00

(54) **Onboard-Unit und Transaktionsserver für ein Straßenmautsystem**
Onboard unit and transaction server for a road toll system
Unité embarquée et serveur de transaction pour un système de péage routier

(43) Veröffentlichungstag der Anmeldung: 29.04.2015
(73) Patentinhaber: Kapsch TrafficCom AG, 1120 Wien (AT)
(72) Erfinder: Eberstaller, Bernd, 3040 Neulengbach (AT)
(74) Vertreter: Weiser, Andreas

(56) Entgegenhaltungen:
- EP-A1- 0 837 341
- EP-A1- 1 605 419
- EP-A1- 1 909 231
- EP-A2- 1 708 143
- EP-A2- 1 821 259
- EP-A2- 1 868 164
- WO-A1-98/54682
- WO-A1-2008/132267
- DE-A1- 10 104 499
- DE-A1-102005 018 557
- DE-A1-102005 029 447
- DE-A1-102006 029 263
- DE-A1-102007 039 200
- JP-A- 2001 208 824
- US-A- 5 970 481
- "Software-Übertragung over the air, Teil der Mitarbeiterzeitung "Sensor"", Zeitschriftenartikel, July 2009 (2009-07),

## Beschreibung

Die vorliegende Erfindung betrifft Komponenten und Verfahren zur Validierung satellitengestützter Straßenmautsyteme.

Satellitengestützte Straßenmautsystem verwenden von Fahrzeugen mitgeführte Onboard-Units (OBUs), welche mit Hilfe eines Satellitenempfängers für ein globales Satellitennavigationssystems (global navigation satellite system, GNSS) wie GPS, GLONASS, Galileo usw. fortlaufend ihre eigene Position und damit die Position des Fahrzeugs bestimmen. Die Folge von Positionsbestimmungen, auch "position fixes" bzw. Positionfixe genannt, wird anschließend in ihrem Datenumfang reduziert und über ein Mobilfunknetz nach z.B. 3GPP-Standards wie GSM, UMTS, LTE usw. an einen zentralen Transaktionsserver versandt, welcher daraus Mauttransaktionen berechnet, um Ortnutzungen der Fahrzeuge wie das Befahren einer Mautstraße, den Eintritt in ein kostenpflichtiges Gebiet, das Parken an einem bestimmten Ort usw. zu vergebühren. Dazu wird in der OBU oder im Transaktionsserver oder einem diesem vorgeordneten Proxy eine Zuordnung der Positionsfixe zu Straßensegmenten einer digitalen Straßenkarte vorgenommen ("map matching") und die so ermittelten Segmentkennungen der benutzten Straßensegmente werden als Grundlage für die Mauttransaktionen herangezogen.

Die EP 1 909 231 A1 beschreibt eine OBU, die Straßenbenutzungsgebühren in der OBU anhand von Positionsdaten berechnet. Zur Verifizierung der berechneten Straßenbenutzungsgebühr kann auch eine Folge von datenreduzierten Positionsdaten an eine Zentrale geschickt werden, die dort die Straßenbenutzungsgebühr ermittelt und sie mit der in der OBU berechneten vergleicht.

Zur Überprüfung der korrekten Funktionsweise eines solchen GNSS-basierten Straßenmautsystems müssen derzeit Testfahrzeuge mit Referenz-OBUs auf Testfahrten ausgeschickt und die von diesen im Transaktionsserver ausgelösten Mauttransaktionen mit den von den Testfahrzeugen tatsächlich befahrenen Wegen verglichen werden. Dies erfordert eigene Testfahrzeuge, kostspielige hochgenaue Referenz-OBUs und großen Zeitaufwand und kann stets nur für kleine Teilbereiche des Straßennetzes durchgeführt werden.

Die Erfindung setzt sich zum Ziel, diese Nachteile zu überwinden und eine verbesserte Lösung zur Überprüfung GNSS-basierter Straßenmautsystem zu schaffen.

In einem ersten Aspekt schafft die Erfindung dazu eine Onboard-Unit für ein Straßenmautsystem, umfassend
einen Satellitenempfänger zur Erzeugung einer Folge von Positionsfixen aus Positionssignalen eines globalen Satellitennetzwerks,
ein Mobilfunkmodul zur Kommunikation über ein Mobilfunknetz mit einem entfernten Transaktionsserver, und
einen an den Satellitenempfänger angeschlossenen und das Mobilfunkmodul steuernden Prozessor,
welche Onboard-Unit sich erfindungsgemäß dadurch auszeichnet, dass der Prozessor dafür ausgebildet ist, in einem ersten Betriebszustand aus der Folge von Positionsfixen durch Datenreduktion eine datenreduzierte Folge von Positionsmeldungen zu erzeugen und über das Mobilfunkmodul an den Transaktionsserver zu senden und
in einem zweiten Betriebszustand alle Positionsfixe der Folge über das Mobilfunkmodul an den Transaktionsserver zu senden,
wobei der Prozessor mittels einer über das Mobilfunkmodul empfangenen Aufforderungsnachricht vom ersten Betriebsmodus alternativ oder zusätzlich in den zweiten Betriebsmodus versetzbar ist, und
wobei die Onboard-Unit zur Datenreduktion eine oder mehrere der folgenden Komponenten umfasst:
- einen Mittelwertbildner, welcher aus mehreren Positionsfixen eine Positionsmeldung mittelt;
- einen Schätzer, welcher mehrere Positionsfixe durch einen Polygonzug oder eine Kurve approximiert und daraus eine Positionsmeldung erzeugt;
- ein Geschwindigkeitsfilter, welches mit zunehmender Geschwindigkeit eine zunehmende Datenreduktion durchführt;
- ein Stillstandsfilter, welches bei Detektion von Stillstand eine Datenreduktion durchführt;
- ein Kurven- bzw. Richtungsfilter, welches mit abnehmender Richtungsänderung eine zunehmende Datenreduktion durchführt.

Onboard-Units gemäß der Erfindung können damit von einem entfernten Ort aus, z.B. dem Transaktionsserver in einer Zentrale des Straßenmautsystems, in einen speziellen Auditierungs-Betriebszustand ("audit mode") versetzt werden, in welchem sie zusätzlich (oder alternativ) zu ihren "herkömmlichen" Positionsmeldungen die diesen zugrundeliegenden "rohen" Positionsfixe ihres Satellitenempfängers an den Transaktionsserver senden. Der Transaktionsserver verfügt damit über alle notwendigen Daten, um die in den Onboard-Units oder nachgeordneten Komponenten wie einem Map-Matching-Proxy stattfindenden Datenreduktionen nachrechnen bzw. nachprüfen zu können. Die Notwendigkeit für spezielle Testfahrzeuge oder Referenz-OBUs entfällt. Jede erfindungsgemäß ausgestattete und an einen Endbenutzer ausgelieferte Onboard-Unit kann so zentral angesprochen und zur Auditierung des Straßenmautsystems eingesetzt werden.

Alle genannten Arten von Datenreduktionen können mit Hilfe der Erfindung im Transaktionsserver nachgerechnet und damit auditiert werden. So können im Transaktionsserver z.B. Kompressionseinstellungen überprüft werden (z.B. "progressiv" für starke Kompressionen vs. "regressiv" für geringe Kompressionen) oder durch Verwendung von genaueren Karten im Transaktionsserver höhere Genauigkeiten für die Auditierung erreicht werden.

In einem zweiten Aspekt schafft die Erfindung einen dazu ausgerüsteten Transaktionsserver, welcher dafür ausgebildet ist, eine von einer Onboard-Unit über das Mobilfunknetz empfangene Folge von Positionsfixen aus Positionssignalen eines globalen Satellitennetzwerks mit einer von derselben Onboard-Unit über das Mobilfunknetz empfangenen Folge von Positionsmeldungen, die durch Datenreduktion der Positionsfixe entstanden sind, zu vergleichen, indem der Transaktionsserver zu Vergleichszwecken eine Referenz-Datenreduktion an den empfangenen Positionsfixen durchführt, wobei der Transaktionsserver zur Datenreduktion eine oder mehrere der folgenden Komponenten umfasst:
- einen Mittelwertbildner, welcher aus mehreren Positionsfixen eine Positionsmeldung mittelt;
- einen Schätzer, welcher mehrere Positionsfixe durch einen Polygonzug oder eine Kurve approximiert und daraus eine Positionsmeldung erzeugt;
- ein Geschwindigkeitsfilter, welches mit zunehmender Geschwindigkeit eine zunehmende Datenreduktion durchführt;
- ein Stillstandsfilter, welches bei Detektion von Stillstand eine Datenreduktion durchführt;
- ein Kurven- bzw. Richtungsfilter, welches mit abnehmender Richtungsänderung eine zunehmende Datenreduktion durchführt.

Im Transaktionsserver kann wesentlich mehr Rechenleistung vorgesehen werden als in einer kostengünstigen, leichtgewichtigen OBU im Feld, so dass beliebig rechenintensive, komplexe Berechnungen durchgeführt werden können, um die von Onboard-Units im Feld durchgeführten Datenreduktionen hochgenau nachrechnen und mit den erhaltenen Positionsmeldungen vergleichen zu können. Überdies kann das Nachrechnen bzw. Vergleichen in einer kontrollierten und zertifizierten Rechenumgebung im Transaktionsserver durchgeführt werden, welche hohes Vertrauen des Auditors des Straßenmautsystems genießt und z.B. auch im Eigentum bzw. der Verfügungsgewalt des Auditors stehen kann.

Das Versetzen der Onboard-Units in den Auditierungsmodus kann direkt vom Transaktionsserver ausgelöst werden, indem dieser über das Mobilfunknetz eine Aufforderungsnachricht an eine Onboard-Unit sendet, um zu einer Folge von Positionsmeldungen die diesen zugrundeliegende Folge von Positionsfixen zu erhalten. So können auch bestimmte Gruppen von Onboard-Units im Feld nach Kriterien ausgewählt werden, beispielsweise nach Hersteller, Charge, Kennung usw.

Bevorzugt können vom Transaktionsserver einzelne oder alle Onboard-Units in einem bestimmten geografischen Gebiet und/oder in einem bestimmten Zeitfenster in den Auditierungsmodus versetzt werden. Dazu ist der Transaktionsserver bevorzugt dafür ausgebildet, eine Aufforderungsnachricht an eine Onboard-Unit zu senden, wenn eine oder mehrere Positionsmeldung(en) der Onboard-Unit deren Aufenthalt in einem ausgewählten geographischen Gebiet anzeigen. Dadurch können sonst von herkömmlichen Testfahrzeugen nur selten oder schwer erreichbare Regionen des Straßenmautsystems und/oder das Verhalten des Straßenmautsystems zu bestimmten Tageszeiten selektiv überprüft werden.

Die Onboard-Unit und der Transaktionsserver der Erfindung umfassen in einer Ausführungsform zur Datenreduktion weiters einen Map-Matcher, welcher jeweils einen oder mehrere Positionsfixe einem Segment in einer digitalen Straßenkarte zuordnet und daraus eine Positionsmeldung erzeugt.

In einer weiteren bevorzugten Ausführungsform der Erfindung ist der Prozessor mit einer Schnittstelle zum Empfang von Sensordaten zumindest eines weiteren Sensors ausgestattet und sendet im zweiten Betriebszustand (Auditierungsmodus) auch Sensordaten des Sensors über das Mobilfunkmodul an den Transaktionsserver. Insbesondere können dazu eine oder mehrere der folgenden Maßnahmen vorgesehen werden:
- der Sensor ist durch den Satellitenempfänger selbst gebildet, beispielsweise einen gesonderten Datenausgang desselben, und die Sensordaten sind Metadaten der Positionsbestimmungsfunktionen des Satellitenempfängers, z.B. Genauigkeits-, Geschwindigkeits-, Beschleunigungs- und/oder Richtungswerte;
- der Sensor ist durch das Mobilfunkmodul gebildet und die Sensordaten sind eine Zellkennung des Mobilfunknetzes;
- der Sensor ist ein WLAN-Empfänger und die Sensordaten sind eine Netzkennung eines WLANs;
- der Sensor ist ein Beschleunigungsmesser und die Sensordaten sind Beschleunigungsmesswerte für Linear- und/oder Kreisbewegungen;
- die Sensordaten sind über die Schnittstelle empfangene Geschwindigkeits- und/oder Lenkwinkeldaten des Fahrzeugs.

Alle diese Sensordaten können im Transaktionsserver dazu verwendet werden, die empfangenen Positionsmeldungen weiter zu validieren, z.B. zu plausibilisieren und/oder fehlerhafte oder fehlende Positionsfixe für den Vergleich mit den Positionsmeldungen zu kompensieren bzw. korrigieren.

Die Erfindung wird nachstehend anhand von in den beigeschlossenen Zeichnungen dargestellten Ausführungsbeispielen näher erläutert. In den Zeichnungen zeigen:
Fig. 1 ein Straßenmautsystem mit erfindungsgemäßen Komponenten schematisch im Überblick;
Fig. 2 ein Systemdiagram des Straßenmautsystems von Fig. 1;
die Fig. 3a und 3b eine Onboard-Unit gemäß der Erfindung in zwei verschiedenen Betriebszuständen;
Fig. 4 ein Blockschaltbild des Transaktionsservers der Erfindung mit schematisch eingezeichneten Funktionen; und
die Fig. 5 und 6 State/Transition-Diagramme der Onboard-Unit der Erfindung in zwei verschiedenen Ausführungsformen.

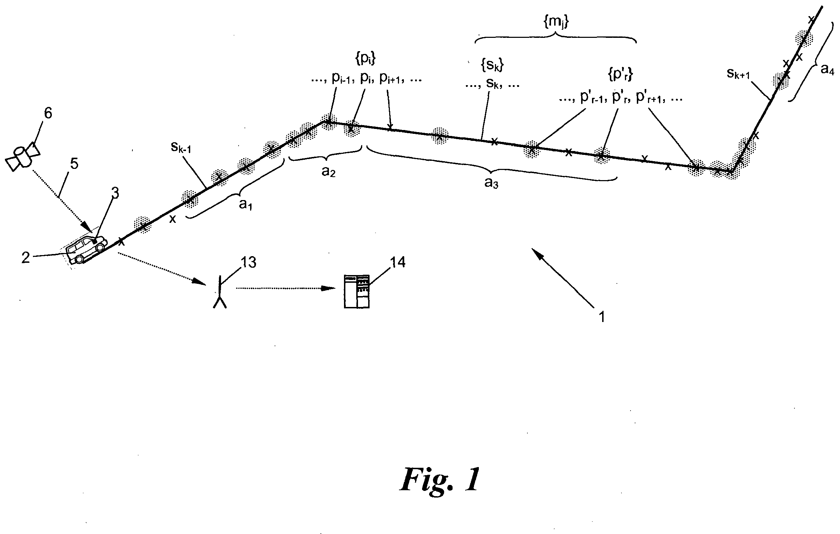

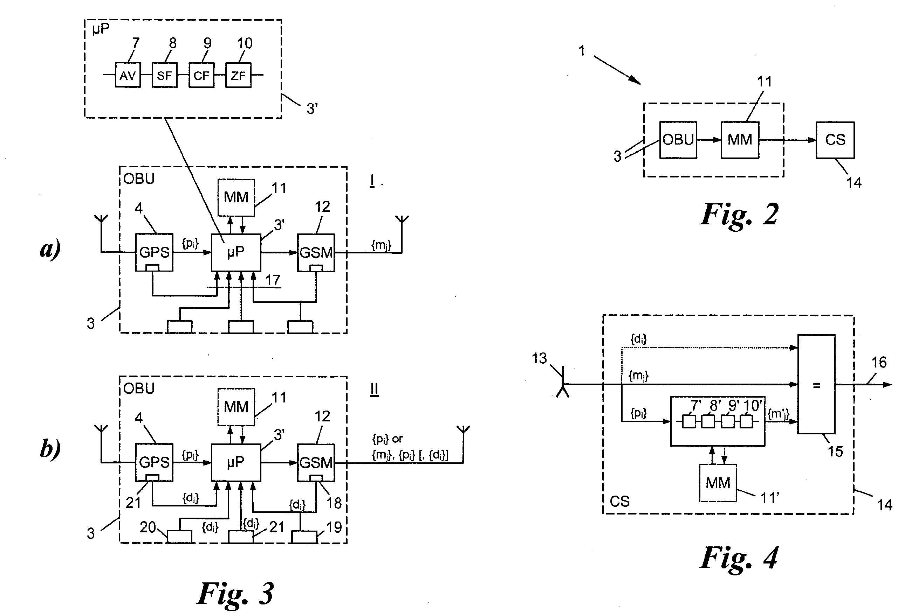

Die Fig. 1 und 2 zeigen ein satellitengestütztes Straßenmautsystem 1 im Betrieb (Fig. 1) und in abstrahierter Form (Fig. 2). Gemäß Fig. 1 fährt in einem Straßennetz aus Straßensegmenten s₁, s₂, ..., allgemein, sₖ, ein Fahrzeug 2, das eine Onboard-Unit (OBU) 3 mitführt, deren Innenaufbau in Fig. 3 gezeigt ist.

Die OBU 3 hat einen Satellitenempfänger 4 für Positionssignale 5 eines globalen Satellitennetzwerks (global navigation satellite system, GNSS) 6, z.B. ein GPS-, GLONASS-, Galileo-System od.dgl. Der Satellitenempfänger 4 bestimmt daraus fortlaufend die globale geografische Position der OBU 3 und erzeugt so eine Folge von Positionsfixen (position fixes) p₁, p₂, ..., allgemein pᵢ.

Aus der Folge {pᵢ} von Positionsfixen erzeugt ein Prozessor 3' in der OBU 3 - unter Verwendung einer oder mehrer Komponenten 7 bis 11 wie später beschrieben - durch Datenreduktion eine datenreduzierte Folge {mⱼ} von Positionsmeldungen m₁, m₂, ..., allgemein mⱼ. Die Positionsmeldungsfolge {mⱼ} wird vom Prozessor 3' mit Hilfe eines angeschlossenen Mobilfunkmoduls 12 über ein Mobilfunknetz 13 an einen Transaktionsserver 14 (central system, CS) versandt, welcher daraus Mauttransaktionen erzeugt, die Ortsnutzungen des Fahrzeugs 2 vermauten, hier das Befahren der Straßensegmente sₖ. Das Mobilfunknetz 13 kann dazu von jeder in der Technik bekannten Art sein, beispielsweise nach den 3GPP-Standards GSM, UMTS, LTE usw., z.B. ein GSM-Netz, von dem in Fig. 1 stellvertretend nur eine Basisstation gezeigt ist.

Um einerseits den Datenverkehr im Mobilfunknetz 13 möglichst gering zu halten und andererseits dem Transaktionsserver 14 die Identifikation der zu vergebührenden Straßensegments sₖ zu erleichtern, ist die vom Prozessor 3' durchgeführte Datenreduktion der Positionsfixfolge {pᵢ} zur Positionsmeldungsfolge {mⱼ} nicht nur eine Datenkomprimierung kodierungstheoretischer Art, sondern eine an den vorliegenden Anwendungsfall angepasste Datenreduktion mit Hilfe einer oder mehrerer der im folgenden beschriebenen Komponenten 7 bis 11:
- ein Mittelwertbildner ("averager") 7, welcher aus mehreren aufeinanderfolgenden Positionsfixen pᵢ eine Positionsmeldung mⱼ mittelt; die Mittelwertbildung kann eine Streichung von Ausreißerwerten, eine Gewichtung nach Genauigkeitswerten des Satellitenempfängers 4 wie HDOP ("horizontal dilution of precision") usw. und/oder eine Approximierung mehrerer Positionsfixe pᵢ durch eine Kurve oder einen Polygonzug, deren Parameter die datenreduzierte Positionsmeldung mⱼ bilden, umfassen;
- ein Geschwindigkeitsfilter (speed filter) 8, welches mit zunehmender Geschwindigkeit der OBU 3 eine zunehmende Datenreduktion (pro Zeit- oder Wegabschnitt der Positionsfixfolge {pᵢ} gesehen) durchführt, wie anhand der beispielhaften Abschnitte a₁ und a₃ gezeigt: Bewegt sich die OBU 3 schnell (Abschnitt a₁), wird jeder Positionsfix pᵢ in die Positionsmeldungsfolge {mⱼ} übernommen, ist die OBU 3 langsam (Abschnitt a₃), wird nur selten ein Positionsfix pᵢ in die Positionsmeldungsfolge {mⱼ} übernommen;
- ein Stillstandsfilter (beispielsweise in das Geschwindigkeitsfilter 8 integriert), das ein Anhalten bzw. eine Phase des Stillstandes der OBU 3 detektiert und in dieser Phase eine Datenreduktion durchführt, z.B. dann nur zu sehr seltenen Zeitpunkten einen Positionsfix pᵢ in die Positionsmeldungsfolge {mⱼ} übernimmt;
- ein Kurven- bzw. Richtungsfilter (curve filter) 9, welches mit abnehmender Richtungsänderung der OBU 3 eine zunehmende Datenreduktion (pro Zeit- oder Wegabschnitt der Positionsfixfolge {pᵢ} gesehen) durchführt, wie anhand der beispielhaften Abschnitte a₂ und a₃ gezeigt: Fährt das Fahrzeug 2 mit der OBU 3 um eine Kurve (Abschnitt a₂), werden häufig bzw. alle Positionsfixe pᵢ in die Positionsmeldungsfolge {mⱼ} übernommen, fährt das Fahrzeug 2 weitgehend gerade bzw. nur schwach gekrümmt (Abschnitt a₃), werden nur wenige bzw. selten Positionsfixe pᵢ in die Positionsmeldungsfolge {mⱼ} übernommen; die Krümmung bzw. Richtungsänderung kann z.B. aus den Winkeln zwischen Verbindungsgeraden zwischen den Positionsfixen pᵢ ermittelt werden;
- ein Zonenfilter (zone filter) 10 (nicht beansprucht), welches für Positions- fixe pᵢ, die in einem vorgegebenen geografischen Bereich liegen, ein vordefiniertes Ausmaß an Daten- reduktion durchführt, beispielsweise in einem Innenstadtgebiet alle Positionsfixe pᵢ in die Positionsmeldungsfolge {mⱼ} aufnimmt oder in einem dünn besiedelten ländlichen Gebiet nur wenige Positionsfixe pᵢ in die Positionsmeldungsfolge {mⱼ} aufnimmt;
   jene Positionsfixe pᵢ, die nach Mittelung, Approximation, Geschwindigkeitsfilterung, Kurvenfilterung und/oder Zonenfilterung in die Positionsmeldungen mⱼ eingeben, sind in Fig. 1 schraffiert unterlegt und mit p'₁, p'₂, ..., allgemein p'ᵣ, bezeichnet;
- ein Kartenabgleicher bzw. Map-Matcher 11, der durch einen Kartenabgleich die Positionsfixe pᵢ bzw. p'ᵣ den Straßensegmenten sₖ einer digitalen Straßenkarte des Straßennetzes zuordnet und die Segmentkennungen - hier der Einfachheit halber mit demselben Bezugszeichen sₖ bezeichnet - in die Positionsmeldungsfolge {mⱼ} aufnimmt; unter den Begriff "Straßensegment" können dabei auch sog. virtuelle Grenzstellen ("virtual gantries") fallen, die in der digitalen Straßenkarte definiert sind und deren Passieren der Map-Matcher 11 durch Kartenabgleich ermittelt; der Begriff "Segmentkennung" sₖ umfasst demgemäß auch Kennungen solcher virtueller Grenzstellen.

Eine OBU 3, die einen derartigen Map-Matcher 11 enthält und die Segmentzuordnung durchführt, d.h. deren Positionsmeldungen mⱼ Segmentkennungen sₖ enthalten, wird auch als "thick client"-OBU bezeichnet; eine OBU 3, welche keinen Map-Matcher 11 enthält und Positionsmeldungen mⱼ aus nicht-segmentzugeordneten datenreduzierten Positionsfixen p'ᵣ versendet, wird auch als "thin client"-OBU bezeichnet. In letzterem Falle kann der Map-Matcher 11 beispielsweise im Transaktionsserver 14 oder einem diesem vorgeordneten Map-Matching-Proxy (nicht gezeigt) implementiert sein. Fig. 2 zeigt beide Varianten von OBUs 3, wobei mit ausgezogenen Linien eine "thin client"-OBU und mit strichlierten Linien eine "thick client"-OBU gezeichnet ist.

Der Transaktionsserver 14 erstellt Mauttransaktionen in der Regel auf Basis der datenreduzierten Positionsmeldungen mⱼ, die er von einer OBU 3 erhält, um deren Weg oder Aufenthalt im Straßennetz zu vermauten. Zur Kontrolle der korrekten Funktionsweise und Datenreduktion in den OBUs 3 dienen die im folgenden beschriebenen Komponenten und Verfahren.

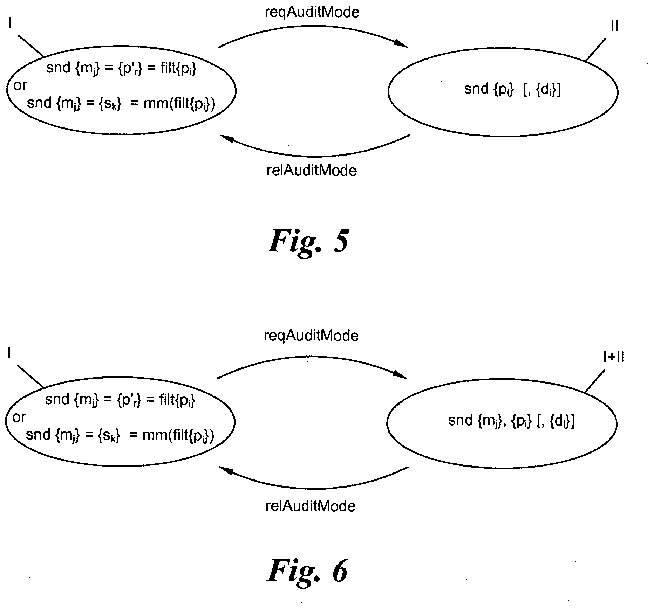

Jede Onboard-Unit 3 ist dazu befähigt, neben ihrem "normalen", soebenen beschriebenen ersten Betriebszustand I, in dem sie aus der Positionsfixfolge {pᵢ} eine datenreduzierte Positionsmeldungsfolge {mⱼ} (sei es mit oder ohne Map-Matching-Funktion) erzeugt und versendet, alternativ oder zusätzlich in einen speziellen zweiten Betriebszustand II überzugehen, in welchem sie die "rohe" Positionsfixfolge {pᵢ} über das Mobilfunknetz 13 an den Transaktionsserver 14 versendet. Der Zustandswechsel vom Betriebszustand I (alternativ oder zusätzlich) in den Betriebszustand II wird dabei durch eine Aufforderungsnachricht reqAuditMode ausgelöst, welche der Transaktionsserver 14 über das Mobilfunknetz 13 an eine ausgewählte OBU 3 sendet. Das Verlassen des Betriebszustandes II kann durch einen entsprechenden Auflösebefehl relAuditMode veranlasst werden, welchen der Transaktionsserver 14 an die ausgewählte OBU 3 sendet, siehe Fig. 5 und 6.

Fig. 5 zeigt eine erste Ausführungsform mit einem "alternativen" Zustandswechsel in den Betriebszustand II ("audit mode"), in welchem die OBU 3 anstelle des Versendens der Positionsmeldungen {mⱼ} die Positionsfixfolge {pᵢ} an den Transaktionsserver 14 sendet. Fig. 6 zeigt eine zweite Ausführungsform mit einem "zusätzlichen" Zustandswechsel in den Betriebszustand II, d.h. in einen Zustand I + II, in welchem die OBU 3 neben der Versendung der Positionsmeldungsfolge {mⱼ} auch die Positionsfixfolge {pᵢ} versendet.

Es versteht sich, dass die Versendung der Positionsfixfolgen und Positionsmeldungsfolgen {pᵢ} und {mⱼ} in den Betriebszuständen I, II und I + II jeweils beliebig segmentiert in Datenpaketen beliebiger Größe erfolgen kann, d.h. mehrere Positionsfixe pᵢ bzw. mehrere Positionsmeldungen mⱼ einer Folge können jeweils zu einem Datenpaket zusammengefasst werden, z.B. nach bestimmten Zeit- oder Wegabschnitten einer Folge oder bei Erreichen bestimmter Datenpaketgrößen. Auch ist es nicht notwendig, dass die Datenpakete der Positionsfixfolge {pᵢ} und der Positionsmeldungsfolge {mⱼ} im Betriebszustand I + II von Fig. 6 in gemeinsamen Datenpaketen oder synchron versendet werden müssen; die beiden Folgen können auch unterschiedlich paketiert und zeitlich verschachtelt versendet werden. Bevorzugt werden die Datenpakete der Positionsfixfolge {pᵢ} im Betriebszustand I + II zu solchen Zeitpunkten versendet, zu denen die OBU 3 "normalerweise", d.h. im Betriebszustand I, keine Datenpakete der Positionsmeldungsfolge {mⱼ} versendet, um den "normalen" Sendebetrieb von Datenpaketen der Positionsmeldungsfolge {mⱼ} auch im Betriebszustand I + II nicht zu beeinträchtigen. Alle diese Varianten fallen unter den Begriff des zusätzlichen Versendens der Positionsfixfolge {pᵢ} zur Positionsmeldungsfolge {mⱼ}.

Sobald der Transaktionsserver 14 eine Aufforderungsnachricht reqAuditMode an eine ausgewählte OBU 3 versandt hat, erhält er ab nun über das Mobilfunknetz 13 anstelle der oder zusätzlich zur Positionsmeldungsfolge {mⱼ} die dafür ursächliche Positionsfixfolge {pᵢ}. Wie in Fig. 4 gezeigt, kann nun der Transaktionsserver 14 mit Hilfe derselben Art von Datenreduktion, wie sie zuvor in der OBU 3 erfolgte, d.h. mit Referenzkomponenten 7' - 11', die den Komponenten 7 - 11 entsprechen, aus der erhaltenen Positionsfixfolge {pᵢ} eine Referenz-Positionsmeldungsfolge {m'ⱼ} erzeugen und in einem Vergleicher 15 mit der erhaltenen Positionsmeldungsfolge {mⱼ} vergleichen. Das Vergleichsergebnis kann auf einem Ausgang 16 des Transaktionsservers 14 bereitgestellt werden und angeben, ob die OBU 3 - und gegebenenfalls ein nachgeordneter Map-Matching-Proxy - die Positionsmeldungen mⱼ korrekt berechnet haben oder nicht. Dadurch kann z.B. auch überprüft werden, ob die Datenkomprimierung in der OBU 3 "zu progressiv" war und aufgrund dessen z.B. die falschen Straßensegmente sₖ detektiert wurden.

Der Transaktionsserver 14 kann bei dem genannten Vergleich auch komplexere bzw. genauere Datenreduktionsverfahren durchführen als in der OBU 3 möglich ist, z.B. auch genaueres Kartenmaterial im Map-Matcher 11' verwenden als die OBU 3 in ihrem Map-Matcher 11, weil der Transaktionsserver 14 in der Regel über mehr Rechenleistung bzw. Rechenzeit verfügt als die OBU 3.

In einer optionalen Ausführungsform können zusätzliche Sensordaten dᵢ der OBU 3 für den Vergleich 15 bzw. bei der Datenreduktion in den Komponenten 7' - 11', d.h. die Validierung bzw. Plausibilisierung der Positionsmeldungen mⱼ, herangezogen werden. Dazu kann, wie in Fig. 3 gezeigt, der Prozessor 3' der Onboard-Unit 3 Schnittstellen 17 für den Empfang weiterer Sensordaten dᵢ aus der Onboard-Unit 3 selbst oder dem Fahrzeug 2 aufweisen und diese weiteren Sensordaten dᵢ als Sensordatenfolge {dᵢ} mit der Positionsdatenfolge {pᵢ} im Betriebszustand II an den Transaktionsservers 14 senden.

Die Sensordaten dᵢ können dabei aus einer oder mehreren der folgenden Datenquellen stammen:
- einem Zellkennungssensor 18 in Form des Mobilfunkmoduls 12 der OBU 3, welcher die jeweils aktuelle Zellkennung eines zellular aufgebauten Mobilfunknetzes 13 ermittelt und dem Prozessor 3' zur Verfügung stellt; anhand einer Liste geografischer Abdeckungsbereiche der Zellen kann dann eine geografische Plausibilisierung der Positionsfixe pᵢ bzw. Positionsmeldungen mⱼ im Transaktionsservers 14 durchgeführt werden;
- einem WLAN-Detektor 19, der die Netwerkkennungen (SSID) von allfällig verfügbaren lokalen Netzwerken (Wireless Local Area Networks, WLANs) ermittelt und dem Prozessor 3' zur Verfügung stellt; anhand einer Liste geografischer Abdeckungsbereiche bekannter WLANs kann dann eine geografische Plausibilisierung der Positionsfixe pᵢ bzw. Positionsmeldungen mⱼ im Transaktionsservers 14 durchgeführt werden;
- einem in der OBU 3 oder im Fahrzeug 2 angeordneten Beschleunigungssensor 20, aus dessen Beschleunigungsdaten durch Koppelnavigation eine ungefähre Trajektorie des Fahrzeugs 2 zur Plausibilisierung der Positionsfixe pᵢ und/oder Positionsmeldungen mⱼ im Transaktionsserver 4 ermittelt werden kann; der Beschleunigungssensor 20 kann Linear- und/oder Kreisbeschleunigungen in einer oder mehreren Achsen erfassen;
- einem im Fahrzeug 2 angeordneten Geschwindigkeits- und/oder Lenkwinkelsensor, der über eine Schnittstelle 21 dem Prozessor 3' Geschwindigkeits- und/oder Lenkwinkeldaten liefert, die ebenfalls für eine Koppelnavigation zur ungefähren Bestimmung einer Trajektorie des Fahrzeugs 2 für die Gegenprüfung im Transaktionsserver 14 herangezogen werden können;
- einem Metadaten-Sensor 22 in Form des Satellitenempfängers 4, beispielsweise eines gesonderten Datenausgangs desselben, welcher Metadaten über die Positionsfix-Bestimmungsfunktionen des Satellitenempfängers 4 liefert, beispielsweise Genauigkeitswerte wie die genannten HDOP-Werte, Geschwindigkeits-, Beschleunigungs- und/oder Richtungswerte, d.h. jegliche Art von Metainformationen, welche der Satellitenempfänger 4 zusätzlich zu den eigentlichen Positionsfixen pᵢ liefern kann.

Die Sensordatenfolge {dᵢ} kann im Vergleichsmodul 15 des Transaktionsservers 14 zur Gegenprüfung der Positionsfixfolge {pᵢ} verwendet werden, um Messwertausfälle oder -fehler in der Positionsfixfolge {pᵢ} und/oder Unstimmigkeiten und Rechenfehler in der Positionsmeldungsfolge {mⱼ} zu ermitteln und damit die Funktionsfähigkeit der OBU 3 zu überprüfen.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Onboard-Unit für ein Straßenmautsystem, umfassend
einen Satellitenempfänger (4) zur Erzeugung einer Folge von Positionsfixen (pᵢ) aus Positionssignalen eines globalen Satellitennetzwerks,
ein Mobilfunkmodul (12) zur Kommunikation über ein Mobilfunknetz (13) mit einem entfernten Transaktionsserver (14), und
einen an den Satellitenempfänger (12) angeschlossenen und das Mobilfunkmodul (12) steuernden Prozessor (3'),
**dadurch gekennzeichnet, dass** der Prozessor dafür ausgebildet ist,
in einem ersten Betriebszustand aus der Folge von Positionsfixen (pᵢ) durch Datenreduktion eine datenreduzierte Folge von Positionsmeldungen (mⱼ)zu erzeugen und über das:Mobilfunkmodul (12) an den Transaktionsserver (14) zu senden und
in einem zweiten Betriebszustand alle Positionsfixe (pᵢ) der Folge über das Mobilfunkmodul (12) an den Transaktionsserver (14) zu senden,
wobei der Prozessor (3') mittels einer über das Mobilfunkmodul (12) empfangenen Aufforderungsnachricht vom ersten Betriebsmodus alternativ oder zusätzlichin den zweiten Betriebsmodus versetzbar ist,
wobei die Onboard-Unit (3) zur Datenreduktion eine oder mehrere der folgenden Komponenten umfasst:
einen Mittelwertbildner (7), welcher aus mehreren Positionsfixen (pᵢ) eine Positionsmeldung (mⱼ) mittelt;
einen Schätzer (7), welcher mehrere Positionsfixe (pᵢ) durch einen Polygonzug oder eine Kurve approximiert und daraus eine Positionsmeldung (mⱼ) erzeugt;
ein Geschwindigkeitsfilter (8), welches mit zunehmender Geschwindigkeit eine zunehmende Datenreduktion durchführt;
ein Stillstandsfilter (8), welches bei Detektion von Stillstand eine Datenreduktion durchführt;
ein Kurven- bzw. Richtungsfilter (9), welches mit abnehmender Richtungsänderung eine zunehmende Datenreduktion durchführt.

2. Onboard-Unit nach Anspruch 1, **dadurch gekennzeichnet,: dass** die Onboard-Unit (3) zur Datenreduktion weiters einen Map-Matcher (11), welcher jeweils einen oder mehrere Positionsfixe (pⱼ) einem Segment (sₖ) in einer digitalen Straßenkarte zuordnet und daraus eine Positionsmeldung (mⱼ) erzeugt, umfasst.

3. Onboard-Unit nach Anspruch 1 oder 2, **dadurch gekennzeichnet, dass** der Prozessor (3') mit einer Schnittstelle (17, 21) zum Empfang von Sensordaten (dᵢ) zumindest eines weiteren Sensors (18 - 20) ausgestattet und im zweiten Betriebszustand auch Sensordaten (dᵢ) des Sensors über:das Mobilfunkmodul (12) an den Transaktionsserver (14) sendet.

4. Onboard-Unit nach Anspruch 3, **dadurch gekennzeichnet, dass** der Sensor (22) durch den Satellitenempfänger (4) gebildet ist und die Sensordaten (dᵢ) Metadaten des Satellitenempfängers, wie Genauigkeits-, Geschwindigkeits-, Beschleunigungs- und/oder Richtungswerte seiner Positionsbestimmung, sind.

5. Onboard-Unit nach Anspruch 3 oder 4, **dadurch gekennzeichnet, dass** der Sensor (18) durch das Mobilfunkmodul (12) gebildet ist und die Sensordaten (dᵢ) eine Zellkennung des Mobilfunknetzes (13) sind.

6. Onboard-Unit nach einem der Ansprüche 3 bis 5, **dadurch gekennzeichnet, dass** der Sensor ein WLAN-Empfänger (19) und die Sensordaten (dᵢ) eine Netzkennung eines WLANs ist.

7. Onboard-Unit nach einem der Ansprüche 3 bis 6, **dadurch gekennzeichnet, dass** der Sensor ein Beschleunigungsmesser (20) und die Sensordaten (dᵢ) Linear- und/oder Kreisbeschleunigungsmesswerte sind.

8. Onboard-Unit nach einem der Ansprüche 3 bis 7, **dadurch gekennzeichnet, dass** die Sensordaten (dᵢ) über die Schnittstelle (17, 21) empfangene Geschwindigkeits- und/oder Lenkwinkeldaten des Fahrzeugs (2) sind.

9. Transaktionsserver für ein Straßenmautsystem, mit einer Schnittstelle zu einem Mobilfunknetz, **dadurch gekennzeichnet, dass** der Transaktionsserver (14) dafür ausgebildet ist, eine von einer Onboard-Unit (3) über das Mobilfunknetz (13) empfangene Folge von Positionsfixen (pᵢ) aus Positionssignalen eines globalen Satellitennetzwerks mit einer von derselben Onboard-Unit (3) über das Mobilfunknetz (13) empfangenen Folge von Positionsmeldungen (mⱼ), die durch Datenreduktion der Positionsfixe (pᵢ) entstanden sind, zu vergleichen, indem der Transaktionsserver (14) zu Vergleichszwecken eine Referenz-Datenreduktion (7' - 11') an den empfangenen Positionsfixen (pᵢ) durchführt, wobei der Transaktionsserver (14) zur Datenreduktion eine oder mehrere der folgenden Komponenten umfasst:
einen Mittelwertbildner (7'), welcher aus mehreren Positionsfixen (pᵢ) eine Referenz-Positionsmeldung (mⱼ') mittelt;
einen Schätzer (7'), welcher mehrere Positionsfixe (pᵢ) durch einen Polygonzug oder eine Kurve approximiert und daraus eine Referenz-Pösitionsmeldung (mⱼ') erzeugt;
ein Geschwindigkeitsfilter (8'), welches mit zunehmender: Geschwindigkeit eine zunehmende Datenreduktion durchführt;
ein Stillstandsfilter (8'), welches bei Detektion von Stillstand eine Datenreduktion durchführt;
ein Kurven- bzw. Richtungsfilter (9'), welches mit abnehmender Richtungsänderung eine zunehmende Datenreduktion durchführt.

10. Transaktionsserver nach Anspruch 9, **dadurch gekennzeichnet, dass** der Transaktionsserver (14) über das Mobilfunknetz (13) eine Aufforderungsnachricht an eine Onboard-Unit (4) sendet, um zu einer Folge von Positionsmeldungen (mⱼ) die diesen zugrundeliegende Folge von Positionsfixen (pᵢ) zu erhalten.

11. Transaktionsserver nach Anspruch: 10, **dadurch gekennzeichnet, dass** der Transaktionsserver (14) dafür ausgebildet ist, eine Aufforderungsnachricht an eine Onboard-Unit (4) zu senden, wenn eine oder mehrere Positionsmeldung(en) (mⱼ) der Onboard-Unit (4) deren Aufenthalt in einem ausgewählten geographischen Gebiet anzeigen.

12. Transaktionsserver nach Anspruch 10 oder 11, **dadurch gekennzeichnet, dass** der Transaktionsserver (14) dafür ausgebildet ist, eine Aufforderungsnachricht an eine Onboard-Unit (3) in einem ausgewählten Zeitfenster zu senden.

13. Transaktiönsserver nach einem der Ansprüche 9 bis 12, **dadurch gekennzeichnet, dass** der Transaktionsserver: (14) dafür ausgebildet ist, von einer Onboard-Unit (3) empfangene Sensordaten (dᵢ) zur Validierung der Positionsfixe (pᵢ) und/oder Positionsmeldungen (mⱼ) zu verwenden.

14. Transaktionsserver nach einem der Ansprüche 9 bis 13, **dadurch gekennzeichnet, dass** der Transaktionsserver (14) dafür ausgebildet ist, eine Aufforderungsnachricht an eine Gruppe: von Onboard-Units (3) zu senden.

## Claims

1. Onboard unit for a road toll system, comprising
a satellite receiver (4) for generating a series of position fixes (pᵢ) from position signals of a global satellite network,
a mobile radio module (12) for communication via a mobile radio network (13) with a remote transaction server (14), and
a processor (3') connected to the satellite receiver (12) and controlling the mobile radio module (12),
**characterized in that** the processor is configured to
in a first operating mode, generate a data reduced series of position reports (mⱼ) from the series of position fixes (pᵢ) by data reduction and to send it via the mobile radio module (12) to the transaction server (14) and
in a second operating mode, send all position fixes (pᵢ) of the series via the mobile radio module (12) to the transaction server (14),
wherein the processor (3') can be switched from the first operating mode alternatively or additionally into the second operating mode by means of a request message received via the mobile radio module (12),
wherein the onboard unit (3) comprises one or more of the following components for data reduction:
an averager (7), which averages a position report (mⱼ) from multiple position fixes (pᵢ);
an estimator (7), which approximates multiple position fixes (pᵢ) via a polygonal line or a curve and therefrom generates a position report (mⱼ);
a velocity filter (8), which performs an increased data reduction with increased velocity;
a standstill filter (8), which performs a data reduction when detecting a standstill;
a curve and/or direction filter (9), which performs an increased data reduction with decreased direction change.

2. Onboard unit according to claim 1, **characterized in that** the onboard unit (3) further comprises for data reduction a map matcher (11), which relates one or more position fixes (pⱼ) each to a segment (sₖ) in a digital road map and therefrom generates a position report (mⱼ).

3. Onboard unit according to claim 1 or 2, **characterized in that** the processor (3') has an interface (17, 21) for receiving sensor data (dᵢ) of at least one further sensor (18 - 20) and in the second operating mode also sends sensor data (dᵢ) of the sensor via the mobile radio module (12) to the transaction server (14).

4. Onboard unit according to claim 3, **characterized in that** the sensor (22) is embodied by the satellite receiver (4) and the sensor data (dᵢ) are meta data of the satellite receiver, such as precision values, velocity values, acceleration values and/or direction values of its position determination.

5. Onboard unit according claim 3 or 4, **characterized in that** the sensor (18) is embodied by the mobile radio module (12) and the sensor data (dᵢ) are a cell identification of the mobile radio network (13).

6. Onboard unit according to any one of the claims 3 to 5, **characterized in that** the sensor is a WLAN receiver (19) and the sensor data (dᵢ) is a network identification of the WLAN.

7. Onboard unit according to any one of the claims 3 to 6, **characterized in that** the sensor is an acceleration measurement unit (20) and the sensor data (dᵢ) are linear and/or circular acceleration measurement values.

8. Onboard unit according to any one of the claims 3 to 7, **characterized in that** the sensor data (dᵢ) are velocity data and/or angular steering data of the vehicle (2) received via the interface (17, 21).

9. Transaction server for a road toll system, having an interface to a mobile radio network, **characterized in that** the transaction server (14) is configured to compare a series of position fixes (pᵢ) from position signals of a global satellite network received from an onboard unit (3) via the mobile radio network (13) to a series of position reports (mⱼ) received from the same onboard unit (3) via the mobile radio network (13), which position reports (mⱼ) were created by data reduction of the position fixes (pᵢ), which is achieved **in that** the transaction server (14) performs a reference data reduction (7' - 11') on the received position fixes (pᵢ) for the purpose of comparison, wherein the transaction server (14) comprises one or more of the following components for data reduction:
an averager (7), which averages a position report (mⱼ) from multiple position fixes (pᵢ);
an estimator (7), which approximates multiple position fixes (pᵢ) via a polygonal line or a curve and therefrom generates a position report (mⱼ);
a velocity filter (8), which performs an increased data reduction with increased velocity;
a standstill filter (8), which performs a data reduction when detecting a standstill;
a curve and/or direction filter (9), which performs an increased data reduction with decreased direction change.

10. Transaction server according to claim 9, **characterized in that** the transaction server (14) sends a request message to an onboard unit (4) via the mobile radio network (13) to obtain for a series of position reports (mⱼ) the series of position fixes (pᵢ) on which the position reports (mⱼ) are based.

11. Transaction server according to claim 10, **characterized in that** the transaction server (14) is configured to send a request message to an onboard unit (4) if one or more position report/s (mⱼ) of the onboard unit (4) indicate/s their presence in a chosen geographical area.

12. Transaction server according to claim 10 or 11, **characterized in that** the transaction server (14) is configured to send a request message to an onboard unit (3) in a chosen time window.

13. Transaction server according to any one of the claims 9 to 12, **characterized in that** the transaction server (14) is configured to use sensor data (dᵢ) received from an onboard unit (3) for validating the position fixes (pᵢ) and/or position reports (mⱼ) .

14. Transaction server according to any one of the claim 9 to 13, **characterized in that** the transaction server (14) is configured to send a request message to a group of onboard units (3).

## Revendications

1. Unité embarquée pour un système de péage routier, comprenant
un récepteur satellite (4) pour la génération d'une suite de coordonnées de position (pᵢ) à partir de signaux de position d'un réseau satellite global,
un module radio mobile (12) pour une communication par l'intermédiaire d'un réseau radio mobile (13) avec un serveur de transactions (14) éloigné, et
un processeur (3') relié au récepteur satellite (12) et commandant le module radio mobile (12),
**caractérisé en ce que** le processeur est conçu pour
générer une suite réduite de données de signalisations de position (mⱼ) dans un premier état de fonctionnement à partir des coordonnées de position (pᵢ) par une réduction de données, et l'envoyer vers le serveur de transaction (14) par l'intermédiaire du module radio mobile (12), et
envoyer toutes les coordonnées de position (pᵢ) de la suite vers le serveur de transaction (14) par l'intermédiaire du module radio mobile (12) dans un deuxième état de fonctionnement,
dans lequel le processeur (3') peut être placé du premier mode de fonctionnement dans le deuxième mode de fonctionnement de manière alternative ou complémentaire au moyen d'un ordre reçu par l'intermédiaire du module radio mobile (12),
dans lequel l'unité embarquée (3) comprend une ou plusieurs des composantes suivantes pour la réduction des données :
un moyen de formation d'une valeur moyenne (7), lequel effectue la moyenne à partir de plusieurs coordonnées de position (pᵢ) pour une signalisation de position (mⱼ) ;
un moyen d'estimation (7), lequel effectue une approximation de plusieurs coordonnées de position (pᵢ) en un tracé polygonal ou en une courbe et génère une signalisation de position (mⱼ) à partir de celle-ci ;
un filtre de vitesse (8), lequel effectue une réduction des données croissante avec une vitesse croissante ;
un filtre d'arrêt (8), lequel effectue une réduction des données lors d'une détection d'un arrêt ;
un filtre de virages, respectivement d'orientation (9), lequel effectue une réduction des données croissante pour une modification d'orientation en diminution.

2. Unité embarquée selon la revendication 1, **caractérisée en ce que** l'unité embarquée (3), pour la réduction des données, comprend en outre un map-matcher (11), lequel associe une ou plusieurs coordonnées de position (pᵢ) chaque à un segment (sₖ) dans une carte routière numérique et génère une signalisation de position (mⱼ) à partir de celui-ci.

3. Unité embarquée selon la revendication 1 ou 2, **caractérisée en ce que** le processeur (3') est équipé d'une interface (17, 21) pour la réception de données de capteur (dᵢ) d'au moins un autre capteur (18 à 20) et envoie également des données de capteur (dᵢ) du capteur vers le serveur de transaction (14) par l'intermédiaire du module radio mobile (12) dans le deuxième état de fonctionnement.

4. Unité embarquée selon la revendication 3, **caractérisée en ce que** le capteur (22) est formé par le récepteur satellite (4) et les données de capteur (dᵢ) sont des métadonnées du récepteur satellite, comme des valeurs de précision, de vitesse, d'accélération et/ou d'orientation de sa détermination de position.

5. Unité embarquée selon la revendication 3 ou 4, **caractérisée en ce que** le capteur (18) est formé par le module radio mobile (12) et les données de capteur (dᵢ) constituent un indicateur de cellule du réseau radio mobile (13).

6. Unité embarquée selon l'une des revendications 3 à 5, **caractérisée en ce que** le capteur est un récepteur WLAN (19) et les données de capteur (dᵢ) constituent une identification de réseau d'un WLAN.

7. Unité embarquée selon l'une des revendications 3 à 6, **caractérisée en ce que** le capteur est un système de mesure de l'accélération (20) et les données de capteurs (dᵢ) sont des valeurs de mesure d'accélération linéaire et/ou circulaire.

8. Unité embarquée selon l'une des revendications 3 à 7, **caractérisée en ce que** les données de capteur (dᵢ) sont des données de vitesse et/ou d'angles de braquage du véhicule (2) reçues par l'intermédiaire de l'interface (17, 21).

9. Serveur de transaction pour un système de péage routier, avec une interface vers un réseau radio mobile, **caractérisé en ce que** le serveur de transaction (14) est conçu pour comparer une suite de coordonnées de positions (pᵢ) constituées de signaux de position d'un réseau satellite global reçue d'une unité embarquée (3) par l'intermédiaire du réseau radio mobile (13), avec une suite de signalisations de position (mⱼ), qui ont été générées par une réduction des données des coordonnées de position (pᵢ), reçue de la même unité embarquée (3) par l'intermédiaire du réseau radio mobile (13), **en ce que** le serveur de transaction (14) effectue une réduction de référence des données (7' à 11') au niveau des coordonnées de position (pᵢ) reçues à des fins de comparaison, dans lequel le serveur de transaction (14) comprend une ou plusieurs des composantes suivantes pour la réduction des données :
un moyen de formation d'une valeur moyenne (7'), lequel effectue la moyenne à partir de plusieurs coordonnées de position (pᵢ) pour une signalisation de position de référence (mⱼ') ;
un moyen d'estimation (7'), lequel effectue une approximation de plusieurs coordonnées de position (pᵢ) en un tracé polygonal ou en une courbe et génère une signalisation de position de référence (mⱼ') à partir de celle-ci ;
un filtre de vitesse (8'), lequel effectue une réduction des données croissante avec une vitesse croissante ;
un filtre d'arrêt (8'), lequel effectue une réduction des données lors d'une détection d'un arrêt ;
un filtre de virages, respectivement d'orientation (9'), lequel effectue une réduction des données croissante pour une modification d'orientation en diminution.

10. Serveur de transaction selon la revendication 9, **caractérisé en ce que** le serveur de transaction (14) envoie un message d'ordre vers une unité embarquée (4) par l'intermédiaire du réseau radio mobile (13) afin d'obtenir une suite de coordonnées de position (pᵢ) qui sont à la base d'une suite de signalisations de position (mⱼ).

11. Serveur de transaction selon la revendication 10, **caractérisé en ce que** le serveur de transaction (14) est conçu pour envoyer un message d'ordre vers une unité embarquée (4) lorsqu'une ou plusieurs signalisations de position (mⱼ) de l'unité embarquée (4) signalent sa présence dans un domaine géographique choisi.

12. Serveur de transaction selon la revendication 10 ou 11, **caractérisé en ce que** le serveur de transaction (14) est conçu pour envoyer un message d'ordre vers une unité embarquée (3) pendant une fenêtre de temps choisie.

13. Serveur de transaction selon l'une des revendications 9 à 12, **caractérisé en ce que** le serveur de transaction (14) est conçu pour employer des données de capteurs (dᵢ) reçues d'une unité embarquée (3) pour la validation des coordonnées de position (pᵢ) et/ou des signalisations de position (mⱼ).

14. Serveur de transaction selon l'une des revendications 9 à 13, **caractérisé en ce que** le serveur de transaction (14) est conçu pour envoyer un message d'ordre vers un groupe d'unités embarquées (3).
